# EUROPÄISCHE PATENTANMELDUNG

(11) **EP 4 120 412 A1**
(43) Veröffentlichungstag der Anmeldung: **18.01.2023**
(21) Anmeldenummer: 22171822.4
(22) Anmeldetag: 05.05.2022
(51) Int. Cl.: H01M 10/04, H01M 10/42, H01M 10/48, H01M 10/44

(54) **VERFAHREN ZUM BETRIEB EINER BATTERIEZELLENANORDNUNG, BATTERIEZELLE, STEUERGERÄT, COMPUTERPROGRAMM UND KRAFTFAHRZEUG**

(30) Priorität: 18.05.2021 DE 102021112876
(71) Anmelder: VOLKSWAGEN AG, 38440 Wolfsburg (DE)
(72) Erfinder: Michelsburg, Jürgen, 38165 Lehre (DE)
(74) Vertreter: karo IP

(57) **Zusammenfassung**

Verfahren zum Betrieb einer Batteriezellenanordnung (1), wobei die Batteriezellenanordnung (1) zumindest eine Batteriezelle (2), einen Stromkreis (3) und ein Steuergerät (4) umfasst, wobei die Batteriezelle (2) zumindest ein Gehäuse (5) und darin angeordnet einen Stapel (6), gebildet aus einer Mehrzahl von Elektrodenfolien (7, 8, 9) und dazwischen angeordnete Separatormaterialien (10), umfasst; wobei die Mehrzahl von Elektrodenfolien (7, 8, 9) mindestens eine erste Elektrodenfolie (7) und mindestens eine zweite Elektrodenfolie (8) einer ersten Elektrodenart, also einer Kathode, sowie mindestens eine dritte Elektrodenfolie (9) einer zweiten Elektrodenart, also einer Anode, umfasst.

## Beschreibung

Die Erfindung betrifft ein Verfahren zum Betrieb einer Batteriezellenanordnung, eine Batteriezelle für eine Batteriezellenanordnung und ein Kraftfahrzeug mit einer Batteriezellenanordnung.

Eine Batteriezellenanordnung umfasst zumindest eine Batteriezelle, einen Stromkreis und ein Steuergerät zur Steuerung des Betriebs der Batteriezellenanordnung. Über den Stromkreis ist die mindestens eine Batteriezelle mit zumindest einem Verbraucher elektrisch leitend verbunden. Eine Batteriezelle umfasst zumindest ein Gehäuse sowie einen darin angeordneten Stapel, gebildet aus einer Mehrzahl von Elektrodenfolien und dazwischen angeordneten Separatormaterialien. Die Elektrodenfolien sind in einem Elektrolyt angeordnet. Jede der Elektrodenfolien ist über jeweils einen Stromsammler mit einem, sich durch das Gehäuse nach außen erstreckenden Stromanschluss (ein sogenannte Ableiter) der Batteriezelle verbunden. Über die Stromanschlüsse ist die Batteriezelle an den elektrischen Stromkreis angeschlossen.

Das Gehäuse ist insbesondere ein elastisch verformbares oder ein formfestes, gasdicht ausgeführtes Gehäuse, wobei darin ein Stapel aufeinander angeordneter Elektrodenfolien angeordnet ist.

Eine Batteriezelle ist ein Stromspeicher, der z. B. in einem Kraftfahrzeug zum Speichern von elektrischer Energie eingesetzt wird. Insbesondere weist z. B. ein Kraftfahrzeug eine elektrische Maschine zum Antrieb des Kraftfahrzeuges (einen Traktionsantrieb) auf, wobei die elektrische Maschine durch die in der Batteriezelle gespeicherte elektrische Energie antreibbar ist.

Es sind z. B. Batteriezellen mit flüssigen oder festen Elektrolyten (Feststoffbatterie) bekannt.

Ein Batteriemodul umfasst insbesondere eine Mehrzahl von Batteriezellen, die miteinander elektrisch in Reihe oder parallel-geschaltet und in einem Modulgehäuse angeordnet sind. Auch einzelne Batteriemodule können miteinander elektrisch in Reihe oder parallel-geschaltet werden. Eine Batterie umfasst ein Batteriemodul oder eine Mehrzahl von Batteriemodulen.

Es sind Batteriezellen mit unterschiedlichen Kathodenmaterialien und/oder Anodenmaterialien bekannt, wobei diese Paare aus Kathoden und Anoden einer Batteriezelle zueinander parallelgeschaltet angeordnet sind. Die Aktivmaterialien können insbesondere einerseits hinsichtlich einer hohen Energiedichte (also zur Speicherung einer größeren Menge an Energie) bei geringer Leistungsbereitstellung (also geringere Abgaberate der gespeicherten Energie) oder andererseits hinsichtlich einer niedrigeren Energiedichte aber dafür höherer Leistungsbereitstellung ausgewählt werden.

Aus der KR 10 2018 0013512 A1 ist eine Batteriezelle mit unterschiedlichen Kathodenmaterialien bekannt.

Aus der US 2019/0198864 A1 ist eine mehrlagige Aktivmaterialbeschichtung einer Kathode bekannt.

Aufgabe der vorliegenden Erfindung ist es, die mit Bezug auf den Stand der Technik angeführten Probleme zumindest teilweise zu lösen. Insbesondere soll ein Verfahren vorgeschlagen werden, durch das eine Batteriezellenanordnung bzw. eine Batteriezelle möglichst effektiv betrieben werden kann.

Zur Lösung dieser Aufgaben trägt ein Verfahren mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird ein Verfahren zum Betrieb einer Batteriezellenanordnung vorgeschlagen. Die Batteriezellenanordnung umfasst zumindest eine Batteriezelle, einen Stromkreis und ein Steuergerät.

Die Batteriezelle umfasst zumindest ein Gehäuse und darin angeordnet einen Stapel, gebildet aus einer Mehrzahl von Elektrodenfolien und dazwischen angeordnete Separatormaterialien. Die Mehrzahl von Elektrodenfolien umfasst mindestens eine erste Elektrodenfolie und mindestens eine zweite Elektrodenfolie einer ersten Elektrodenart, nämlich nach Art einer Kathode, sowie mindestens eine dritte Elektrodenfolie einer zweiten Elektrodenart, nämlich nach Art einer Anode. Jede der Elektrodenfolien ist über jeweils einen Stromsammler mit jeweils einem, sich durch das Gehäuse nach außen erstreckenden (elektrischen) Stromanschluss der Batteriezelle verbunden. Die Batteriezelle weist mindestens drei Stromanschlüsse auf, über die die Batteriezelle an den Stromkreis angeschlossen ist. Die mindestens eine erste Elektrodenfolie und die mindestens eine zweite Elektrodenfolie weisen voneinander unterschiedlich ausgeführte Aktivmaterialien auf. Die mindestens eine erste Elektrodenfolie ist mit einem ersten Stromanschluss, die mindestens eine zweite Elektrodenfolie mit einem zweiten Stromanschluss und die mindestens eine dritte Elektrodenfolie mit einem dritten Stromanschluss elektrisch leitend verbunden.

Das Steuergerät steuert eine elektrische Verschaltung der Batteriezelle mit dem Stromkreis. Es ist zur Durchführung des nachfolgend erläuterten Verfahrens geeignet ausgeführt.

Das Verfahren umfasst zumindest die folgenden Schritte:
a) Ermitteln einer Temperatur der Batteriezelle und Vergleichen der ermittelten Temperatur mit einer (vorgegebenen oder vorgebbaren) Grenztemperatur;
b) wobei,
   wenn die ermittelte Temperatur unterhalb der Grenztemperatur liegt
      i. Betreiben der Batteriezelle ausschließlich über die mindestens eine erste Elektrodenfolie und die mindestens eine dritte Elektrodenfolie;
      oder
   wenn die Temperatur mindestens der Grenztemperatur entspricht (oder darüber liegt)
      ii. Betreiben der Batteriezelle ausschließlich über
      - die mindestens eine zweite Elektrodenfolie und die mindestens eine dritte Elektrodenfolie, oder
      - über mindestens eine zweite Elektrodenfolie, die mindestens eine erste Elektrodenfolie und die mindestens eine dritte Elektrodenfolie.

Die obige (nicht abschließende) Einteilung der Schritte soll vorrangig zur Unterscheidung dienen und keine Reihenfolge und/oder Abhängigkeit erzwingen. Ebenso ist möglich, dass Schritte einander zumindest teilweise zeitlich überlagern. Ganz besonders bevorzugt findet Schritt b) nach Schritt a) statt. Schritt a) kann auch unabhängig von Schritt b) durchgeführt werden. Schritt a) kann auch kontinuierlich oder periodisch durchgeführt werden. Schritt b) ist bedingt und wird entsprechend der angegebenen Alternativen dann ausgeführt, wenn die ermittelte Temperatur in einer bestimmten Relation zur Grenztemperatur vorliegt.

Die Batteriezelle ist insbesondere eine Pouchzelle (mit einem verformbaren Gehäuse bestehend aus einer Pouchfolie) oder eine prismatische Zelle (mit einem formfesten Gehäuse). Eine Pouchfolie ist ein bekanntes verformbares Gehäuseteil, dass als Gehäuse für sogenannte Pouchzellen eingesetzt wird. Es handelt sich dabei um ein Kompositmaterial, z. B. umfassend einen Kunststoff und Aluminium.

Innerhalb der Batteriezelle sind insbesondere keine weiteren Gehäuse vorgesehen, in denen einzelne Gruppen von Elektrodenfolien angeordnet sind. Die Elektrodenfolien werden also insbesondere nur von einem gemeinsamen Gehäuse umschlossen. Das Gehäuse ist insbesondere flüssigkeitsdicht, ggf. gasdicht ausgeführt. Innerhalb des Gehäuses ist insbesondere ein flüssiger Elektrolyt angeordnet, es kann aber auch ein fester oder gelförmiger Elektrolyt vorgesehen sein.

Die Batteriezelle ist insbesondere eine Lithium-Ionen-Batteriezelle.

Die einzelnen Folien der Mehrzahl von Elektrodenfolien sind aufeinander angeordnet und bilden insbesondere einen Stapel. Dabei sind Anoden und Kathoden wechselweise und jeweils durch ein Separatormaterial getrennt voneinander angeordnet.

Insbesondere wird eine Elektrodenfolien durch einen (metallischen) Stromsammler, insbesondere eine Folie, ausgebildet, der insbesondere auf seinen größten, einander gegenüberliegenden, Seitenflächen mit einem Aktivmaterial beschichtet ist.

In der Batteriezelle sind zumindest zwei verschiedene Kathoden vorgesehen, also mindestens eine erste Elektrodenfolie mit einem ersten Aktivmaterial und mindestens eine zweite Elektrodenfolie mit einem zweiten Aktivmaterial.

Bei aktuellen Batteriezellen wird als Aktivmaterial für Kathoden in der Regel Li(NiCoMn)O₂, auch als Li-NMC, also als Lithium-Nickel-Mangan-Cobalt-Oxid bezeichnet, verwendet. Dieses Kathodenmaterial ist jedoch für Temperaturen unter null Grad Celsius nicht gut geeignet. Bei Temperaturen unter null Grad Celsius reduziert sich die Reichweite eines mit derartigen Batteriezellen ausgestatteten Kraftfahrzeuges damit um ca. 30%.

Bisher wurde daher die Batterie bzw. die Batteriezelle vorgewärmt. Das Vorwärmen erfordert jedoch einen hohen Energieeinsatz, so dass dadurch die Reichweite eines Kraftfahrzeuges reduziert wird. Alternativ wurden Batteriezellen mit einem anderen Aktivmaterial für die Kathode eingesetzt, z. B. mit LiFePO₄ (Lithium-Eisen-Phosphat). Dieses Aktivmaterial weist jedoch eine geringere Energiedichte auf, so dass sich dadurch die Reichweite eines Kraftfahrzeuges vor allem bei Temperaturen über null Grad Celsius gegenüber Batterien mit anderem Aktivmaterial reduziert.

Vor diesem Hintergrund wird vorgeschlagen, die Batteriezelle mit zumindest zwei unterschiedlichen Kathoden-Aktivmaterialien auszuführen. Infolge der über das Steuergerät ermöglichten gezielten Verschaltung der unterschiedlichen Elektrodenfolien der ersten Elektrodenart kann bei niedrigen Temperaturen gerade die mindestens eine erste Elektrodenfolie zur Bereitstellung elektrischer Energie genutzt werden. Die dabei in der Batteriezelle entstehende Wärme wird zur Erwärmung der mindestens einen zweiten Elektrodenfolie genutzt, die dann, insbesondere bei Erreichen der Grenztemperatur, durch das Steuergerät zur Bereitstellung elektrischer Energie dazugeschaltet werden kann. Die mindestens eine erste Elektrodenfolie kann dann aus dem Stromkreis ausgekoppelt oder falls erforderlich weiter betrieben werden. Damit muss insbesondere keine zusätzliche Energie zum Vorwärmen der Batteriezelle verwendet werden.

Dazu ist jede der Elektrodenfolien insbesondere über jeweils einen Stromsammler mit jeweils einem, sich durch das Gehäuse nach außen erstreckenden Stromanschluss der Batteriezelle verbunden. Die Batteriezelle weist mindestens drei Stromanschlüsse auf, über die die Batteriezelle an den Stromkreis angeschlossen ist. Die mindestens eine erste Elektrodenfolie ist, bzw. alle erste Elektrodenfolien sind, mit einem ersten Stromanschluss elektrisch leitend verbunden. Die mindestens eine zweite Elektrodenfolie, bzw. alle zweiten Elektrodenfolien, mit einem zweiten Stromanschluss elektrisch leitend verbunden. Die mindestens eine dritte Elektrodenfolie, bzw. alle dritten Elektrodenfolien, mit einem dritten Stromanschluss elektrisch leitend verbunden. Über das Steuergerät kann also ein Stromkreis über die mindestens eine erste Elektrodenfolie und die mindestens eine dritte Elektrodenfolie (also ohne Einbindung der mindestens einen zweiten Elektrodenfolie) oder alternativ oder ggf. zusätzlich über die mindestens eine zweite Elektrodenfolie und die mindestens eine dritte Elektrodenfolie (also ohne Einbindung der mindestens einen ersten Elektrodenfolie) geschlossen werden. Ggf. können aber auch alle Elektrodenfolien zumindest zeitweise gleichzeitig betrieben werden. Das Steuergerät kann insbesondere auch unabhängig von der Temperatur eine bestimmte Verschaltung der Elektrodenfolien vornehmen.

Der Betrieb der Batteriezelle umfasst insbesondere das Laden oder Entladen der Batteriezelle bzw. der an den Stromkreis angeschlossenen Elektrodenfolien.

Im Rahmen des Verfahrens erfolgt gemäß Schritt a) ein Ermitteln einer Temperatur der Batteriezelle und ein Vergleich mit einer Grenztemperatur. Die Grenztemperatur ist insbesondere in dem Steuergerät hinterlegt bzw. gespeichert. Die Grenztemperatur beträgt z. B. zwischen -5 Grad Celsius und +5 Grad Celsius, bevorzugt null Grad Celsius.

Das Ermitteln der Temperatur kann eine Messung der Temperatur oder eine Abschätzung der Temperatur umfassen. Dabei ist es nicht zwingend erforderlich, dass die Temperatur in oder in der Nähe der Batteriezelle gemessen wird. Ggf. ist es ausreichend, eine Umgebungstemperatur zu bestimmen bzw. zu messen und daraus eine Temperatur der Batteriezelle abzuleiten.

Schritt b) Fall i. wird insbesondere dann durchgeführt, wenn die Temperatur unterhalb der Grenztemperatur liegt. Gemäß Schritt b) Fall i. erfolgt ein Betreiben der Batteriezelle ausschließlich über die mindestens eine erste Elektrodenfolie und die mindestens eine dritte Elektrodenfolie.

Schritt b) Fall ii. wird insbesondere dann durchgeführt, wenn die Temperatur mindestens der Grenztemperatur entspricht. Gemäß Schritt b) Fall ii. erfolgt ein Betreiben der Batteriezelle ausschließlich über die mindestens eine zweite Elektrodenfolie und die mindestens eine dritte Elektrodenfolie oder zusätzlich über die mindestens eine erste Elektrodenfolie und die mindestens eine dritte Elektrodenfolie.

Insbesondere ist ein gewichtsmäßiger Anteil des zweiten Aktivmaterials in der Batteriezelle höher als ein Anteil des ersten Aktivmaterials. Durch einen höheren Anteil des zweiten Aktivmaterials und einen im Verhältnis dazu geringeren Anteil des ersten Aktivmaterials innerhalb der Batteriezelle kann die Reichweite eines durch die Batteriezelle betriebenen Kraftfahrzeuges bei höheren Temperaturen (also oberhalb von z. B. null Grad Celsius) weitgehend erhalten bleiben. Bei niedrigen Temperaturen (also unterhalb von z. B. null Grad Celsius) erhöht sich die Reichweite jedoch deutlich gegenüber einer konventionellen Batteriezelle, die mit Heizelementen oder durch ein Heizmedium vorgewärmt werden muss. Zudem wird die vorgeschlagene Batteriezelle etwas kostengünstiger, da das erste Aktivmaterial, z. B. LiFePO₄, pro Kilowattstunde preisgünstiger als das zweite Aktivmaterial, Li(NiCoMn)O₂, ist. Die Reichweite bei Durchschnittstemperaturen reduziert sich jedoch etwas. Dieser Verlust an Reichweite kann jedoch durch Verbau zusätzlicher Batteriezellen kompensiert werden.

Die Anzahl der ersten Elektrodenfolien und/oder zweiten Elektrodenfolien bzw. das Verhältnis der Anteile des jeweiligen Aktivmaterials ist insbesondere im Wesentlichen frei bestimmbar, insbesondere im Hinblick auf
- eine gewünschte Energiedichte bei niedrigen Temperaturen;
- eine gewünschte Vorwärmung der zweiten Elektrodenfolien
- einer gewünschten maximalen Energiedichte (Reichweite)
- die Gesamtkosten der Batteriezelle.

Insbesondere ist die mindestens eine erste Elektrodenfolie so in der Batteriezelle angeordnet, dass möglichst viele der mindestens einen zweiten Elektrodenfolie infolge des Betriebs der Batteriezelle gemäß Schritt b) Fall i. möglichst schnell auf die Grenztemperatur erwärmt werden. Die besonderes vorteilhafte Anordnung der mindestens einen ersten Elektrodenfolie oder Verteilung der Mehrzahl der ersten Elektrodenfolien in dem Stapel kann insbesondere durch eine Simulation während der Konstruktion der Batteriezelle bestimmt werden. Insbesondere kann z. B. mindestens eine erste Elektrodenfolie zentral in dem Stapel angeordnet werden, so dass ausgehend von dieser einen ersten Elektrodenfolie eine Mehrzahl von zweiten Elektrodenfolien, die ggf. auf unterschiedlichen Seiten der einen ersten Elektrodenfolie angeordnet sind, erwärmt werden.

Über das Steuergerät kann die Batteriezelle also insbesondere in einer ausgewählten Betriebsart gemäß Schritt b) Fall i. oder Schritt b) Fall ii. zumindest zeitweise betrieben werden. Dabei können neben der Temperatur der Batteriezelle insbesondere auch weitere Randbedingungen durch das Steuergerät erkannt bzw. berücksichtigt werden (z.B., ob eine hohe oder niedrige Lade- oder Entladerate gefordert ist).

Es wird weiter eine Batteriezellenanordnung vorgeschlagen, zumindest umfassend eine Batteriezelle, einen Stromkreis und ein Steuergerät. Das Steuergerät ist zur Durchführung des beschriebenen Verfahrens und damit zum Betrieb der Batteriezellenanordnung geeignet ausgeführt. Das Steuergerät ist insbesondere zur Steuerung der elektrischen Verschaltung der Batteriezelle mit dem Stromkreis geeignet ausgeführt.

Auf die Ausführungen zum Verfahren, insbesondere zu den dortigen Ausführungen zur Batteriezelle, zum Stromkreis und zum Steuergerät, wird Bezug genommen.

Es wird weiter eine Batteriezelle für die beschriebene Batteriezellenanordnung vorgeschlagen. Auf die Ausführungen zum Verfahren und zur Batteriezellenanordnung, insbesondere zu den dortigen Ausführungen zur Batteriezelle, zum Stromkreis und zum Steuergerät, wird Bezug genommen. Die mindestens eine erste Elektrodenfolie der Batteriezelle weist ein erstes Aktivmaterial und die mindestens eine zweite Elektrodenfolie ein zweites Aktivmaterial auf, wobei die Aktivmaterialien eine voneinander unterschiedliche Zusammensetzung aufweisen.

Insbesondere sind alle Elektrodenfolien der ersten Elektrodenart mit gleich ausgeführten Aktivmaterialien mit einem gemeinsamen Stromanschluss elektrisch leitend verbunden. Insbesondere sind also alle ersten Elektrodenfolien mit dem einen ersten Stromanschluss und alle zweiten Elektrodenfolien mit dem einen zweiten Stromanschluss elektrisch leitend verbunden.

Insbesondere weist die Batteriezelle eine geringere Anzahl der ersten Elektrodenfolien als eine Anzahl der zweiten Elektrodenfolien auf.

Insbesondere sind die ersten Elektrodenfolien und die zweiten Elektrodenfolien in dem Stapel entlang einer Stapelrichtung abwechselnd angeordnet. Dabei sind Elektrodenfolien der ersten Elektrodenart und Elektrodenfolien der zweiten Elektrodenart in bekannter Weise entlang der Stapelrichtung ebenfalls jeweils abwechselnd angeordnet. Weiterhin sind zwischen den Elektrodenfolien unterschiedlicher Elektrodenarten in bekannter Weise Separatoren bzw. Separatormaterial angeordnet.

Es wird weiter ein Kraftfahrzeug vorgeschlagen, zumindest umfassend die beschriebene Batteriezellenanordnung und einen Traktionsantrieb zum Antrieb des Kraftfahrzeuges, wobei der Traktionsantrieb durch die mindestens eine Batteriezelle der Batteriezellenanordnung mit Energie versorgbar ist.

Es wird ein Steuergerät vorgeschlagen, das zur Durchführung des beschriebenen Verfahrens ausgestattet, konfiguriert oder programmiert ist.

Weiter kann das Verfahren auch von einem Computer bzw. mit einem Prozessor einer Steuereinheit ausgeführt werden.

Es wird demnach auch ein System zur Datenverarbeitung vorgeschlagen, das einen Prozessor umfasst, der so angepasst/konfiguriert ist, dass er das Verfahren bzw. einen Teil der Schritte des vorgeschlagenen Verfahrens durchführt.

Es kann ein computerlesbares Speichermedium vorgesehen sein, das Befehle umfasst, die bei der Ausführung durch einen Computer/Prozessor diesen veranlassen, das Verfahren bzw. mindestens einen Teil der Schritte des vorgeschlagenen Verfahrens auszuführen.

Die Ausführungen zu dem Verfahren sind insbesondere auf die Batteriezellenanordnung, die Batteriezelle, das Steuergerät und/oder das computerimplementierte Verfahren (also den Computer bzw. den Prozessor, das System zur Datenverarbeitung, das computerlesbare Speichermedium) und das Kraftfahrzeug übertragbar und umgekehrt.

Die Verwendung unbestimmter Artikel ("ein", "eine", "einer" und "eines"), insbesondere in den

Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: ein Kraftfahrzeug mit einem Traktionsantrieb und einer Batteriezellenanordnung;
- Fig. 2:: einen Stapel von Elektrodenfolien einer ersten Ausführungsvariante einer Batteriezelle in einer perspektivischen Ansicht;
- Fig. 3:: einen Stapel von Elektrodenfolien einer zweiten Ausführungsvariante einer Batteriezelle in einer perspektivischen Ansicht; und
- Fig. 4:: einen Stapel von Elektrodenfolien einer dritten Ausführungsvariante einer Batteriezelle in einer perspektivischen Ansicht.

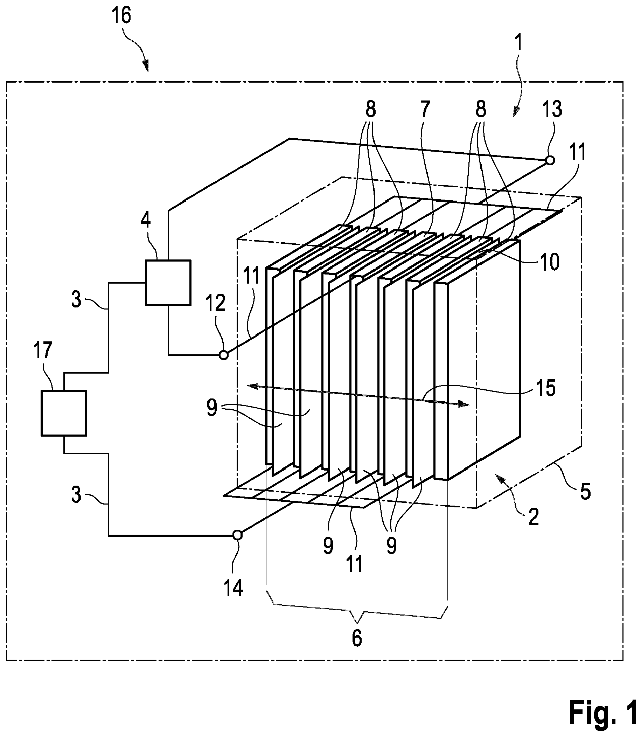

Die Fig. 1 zeigt ein Kraftfahrzeug 16 mit einem Traktionsantrieb 17 und einer Batteriezellenanordnung 1. Der Traktionsantrieb 17 ist durch die Batteriezelle 2 der Batteriezellenanordnung 1 mit Energie versorgbar. Die Batteriezellenanordnung 1 umfasst eine Batteriezelle 2, einen Stromkreis 3 und ein Steuergerät 4. Das Steuergerät 4 ist zur Durchführung des beschriebenen Verfahrens und damit zum Betrieb der Batteriezellenanordnung 1 geeignet ausgeführt. Das Steuergerät 4 ist dabei zur Steuerung der elektrischen Verschaltung der Batteriezelle 2 mit dem Stromkreis 3 geeignet ausgeführt.

Die Batteriezelle 2 umfasst ein Gehäuse 5 und darin angeordnet einen Stapel 6, gebildet aus einer Mehrzahl von Elektrodenfolien 7, 8, 9 und dazwischen angeordnete Separatormaterialien 10. Die Mehrzahl von Elektrodenfolien 7, 8, 9 umfasst eine erste Elektrodenfolie 7 und eine Mehrzahl zweiter Elektrodenfolien 8 einer ersten Elektrodenart, also einer Kathode, sowie eine Mehrzahl dritter Elektrodenfolien 9 einer zweiten Elektrodenart, also einer Anode. Jede der Elektrodenfolien 7, 8, 9 ist über jeweils einen Stromsammler 11 mit jeweils einem, sich durch das Gehäuse 5 nach außen erstreckenden Stromanschluss 12, 13, 14 der Batteriezelle 2 verbunden. Die Batteriezelle 2 weist drei Stromanschlüsse 12, 13, 14 auf, über die die Batteriezelle 2 an den Stromkreis 3 angeschlossen ist. Die eine erste Elektrodenfolie 7 und die Mehrzahl zweiter Elektrodenfolien 8 weisen voneinander unterschiedlich ausgeführte Aktivmaterialien auf. Die eine erste Elektrodenfolie 7 ist mit einem ersten Stromanschluss 12, die Mehrzahl zweiter Elektrodenfolien 8 mit einem zweiten Stromanschluss 13 und die Mehrzahl dritter Elektrodenfolien 9 mit einem dritten Stromanschluss 14 elektrisch leitend verbunden.

Das Steuergerät 4 ist zur Durchführung des Verfahrens geeignet ausgeführt ist und steuert eine elektrische Verschaltung der Batteriezelle 2 mit dem Stromkreis 3.

Die einzelnen Folien der Mehrzahl von Elektrodenfolien 7, 8, 9 sind aufeinander angeordnet und bilden einen Stapel 6. Dabei sind Anoden und Kathoden wechselweise und jeweils durch ein Separatormaterial 10 getrennt voneinander angeordnet.

Jede Elektrodenfolie 7, 8, 9 wird durch einen metallischen Stromsammler 11, z. B. eine Folie, ausgebildet, der auf seinen größten, einander gegenüberliegenden, Seitenflächen mit einem Aktivmaterial beschichtet ist.

In der Batteriezelle 2 sind zwei verschiedene Kathoden vorgesehen, also die erste Elektrodenfolie 7 mit einem ersten Aktivmaterial und die Mehrzahl zweiter Elektrodenfolien 8 mit einem zweiten Aktivmaterial.

Infolge der über das Steuergerät 4 ermöglichten gezielten Verschaltung der unterschiedlichen Elektrodenfolien 7, 8 der ersten Elektrodenart kann bei niedrigen Temperaturen gerade die eine erste Elektrodenfolie 7 zur Bereitstellung elektrischer Energie genutzt werden. Die dabei in der Batteriezelle 2 entstehende Wärme wird zur Erwärmung der zweiten Elektrodenfolien 8 genutzt, die dann, insbesondere bei Erreichen der Grenztemperatur, durch das Steuergerät 4 zur Bereitstellung elektrischer Energie dazugeschaltet werden können. Die erste Elektrodenfolie 7 kann dann aus dem Stromkreis 3 ausgekoppelt oder falls erforderlich weiter betrieben werden.

Über das Steuergerät 4 kann ein Stromkreis 3 über die erste Elektrodenfolie 7 und die dritten Elektrodenfolien 9 - also ohne Einbindung der zweiten Elektrodenfolien 8 - oder alternativ oder ggf. zusätzlich über die zweiten Elektrodenfolien 8 und die dritten Elektrodenfolien 9 - also ohne Einbindung der ersten Elektrodenfolie 7 - geschlossen werden. Ggf. können aber auch alle Elektrodenfolien 7, 8, 9 zumindest zeitweise gleichzeitig betrieben werden. Das Steuergerät 4 kann auch unabhängig von der Temperatur eine bestimmte Verschaltung der Elektrodenfolien 7, 8, 9 vornehmen.

Im Rahmen des Verfahrens erfolgt gemäß Schritt a) ein Ermitteln einer Temperatur der Batteriezelle 2 und ein Vergleich mit einer Grenztemperatur. Die Grenztemperatur ist in dem Steuergerät 4 hinterlegt bzw. gespeichert.

Schritt b) Fall i. wird dann durchgeführt, wenn die Temperatur unterhalb der Grenztemperatur liegt. Gemäß Schritt b) Fall i. erfolgt ein Betreiben der Batteriezelle 2 ausschließlich über die erste Elektrodenfolie 7 und die dritten Elektrodenfolien 9.

Schritt b) Fall ii. wird dann durchgeführt, wenn die Temperatur mindestens der Grenztemperatur entspricht. Gemäß Schritt b) Fall ii. erfolgt ein Betreiben der Batteriezelle 2 ausschließlich über die zweiten Elektrodenfolien 8 und die dritten Elektrodenfolien 9 oder zusätzlich über die erste Elektrodenfolie 7 und die dritten Elektrodenfolien 9.

Die erste Elektrodenfolie 7 ist so in der Batteriezelle 2 angeordnet, dass möglichst viele der zweiten Elektrodenfolien 8 infolge des Betriebs der Batteriezelle 2 gemäß Schritt b) Fall i. möglichst schnell auf die Grenztemperatur erwärmt werden. Die erste Elektrodenfolie 7 ist dazu zentral in dem Stapel 6 angeordnet, so dass ausgehend von dieser einen ersten Elektrodenfolie 7 die Mehrzahl von zweiten Elektrodenfolien 8, die auf unterschiedlichen Seiten der einen ersten Elektrodenfolie 7 angeordnet sind, erwärmt werden.

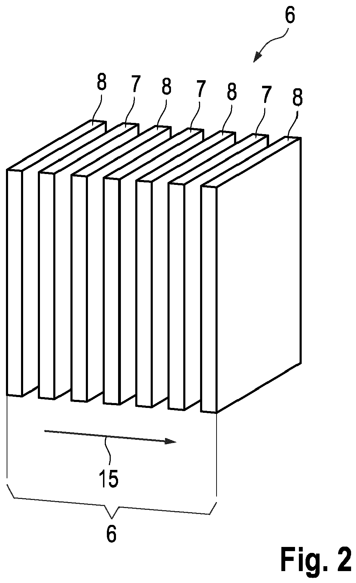

Fig. 2 zeigt einen Stapel 6 von Elektrodenfolien 7, 8 einer ersten Ausführungsvariante einer Batteriezelle 2 in einer perspektivischen Ansicht. Auf die Ausführungen zu Fig. 1 wird verwiesen.

Es sind nur erste Elektrodenfolien 7 und zweite Elektrodenfolien 8 dargestellt. In der Batteriezelle 2 sind dann zwischen den Elektrodenfolien 7, 8 der ersten Elektrodenart jeweils dritte Elektrodenfolien 9 der zweiten Elektrodenart und zwischen jeweils zwei zueinander benachbart angeordneten Elektrodenfolien 7, 8, 9 ein Separatormaterial 10 angeordnet.

Die ersten Elektrodenfolien 7 und die zweiten Elektrodenfolien 8 sind in dem Stapel 6 entlang einer Stapelrichtung 15 abwechselnd angeordnet. Dabei sind Elektrodenfolien 7, 8 der ersten Elektrodenart und Elektrodenfolien 9 der zweiten Elektrodenart in bekannter Weise entlang der Stapelrichtung 15 ebenfalls jeweils abwechselnd angeordnet. Weiterhin sind zwischen den Elektrodenfolien 7, 8, 9 unterschiedlicher Elektrodenarten in bekannter Weise Separatoren bzw. Separatormaterial 10 angeordnet.

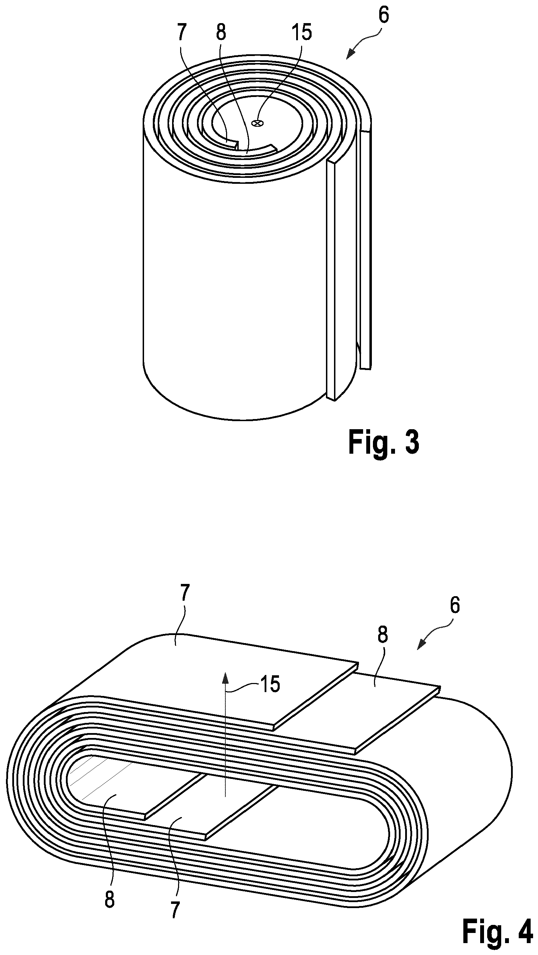

Fig. 3 zeigt einen Stapel 6 von Elektrodenfolien 7, 8 einer zweiten Ausführungsvariante einer Batteriezelle 2 in einer perspektivischen Ansicht. Auf die Ausführungen zu Fig. 2 wird verwiesen.

Im Unterschied zur ersten Ausführungsvariante ist hier ein Stapel 6 für eine zylindrische Batteriezelle 2 dargestellt.

Fig. 4 zeigt einen Stapel 6 von Elektrodenfolien 7, 8 einer dritten Ausführungsvariante einer Batteriezelle 2 in einer perspektivischen Ansicht. Auf die Ausführungen zu Fig. 2 wird verwiesen.

Im Unterschied zur ersten Ausführungsvariante ist hier ein Stapel 6 für eine prismatische Batteriezelle 2 dargestellt.

### Bezugszeichenliste

- 1: Batteriezellenanordnung
- 2: Batteriezelle
- 3: Stromkreis
- 4: Steuergerät
- 5: Gehäuse
- 6: Stapel
- 7: erste Elektrodenfolie
- 8: zweite Elektrodenfolie
- 9: dritte Elektrodenfolie
- 10: Separatormaterial
- 11: Stromsammler
- 12: erster Stromanschluss
- 13: zweiter Stromanschluss
- 14: dritter Stromanschluss
- 15: Stapelrichtung
- 16: Kraftfahrzeug
- 17: Traktionsantrieb

## Patentansprüche

1. Verfahren zum Betrieb einer Batteriezellenanordnung (1), wobei die Batteriezellenanordnung (1) zumindest eine Batteriezelle (2), einen Stromkreis (3) und ein Steuergerät (4) umfasst, wobei die Batteriezelle (2) zumindest ein Gehäuse (5) und darin angeordnet einen Stapel (6), gebildet aus einer Mehrzahl von Elektrodenfolien (7, 8, 9) und dazwischen angeordnete Separatormaterialien (10), umfasst; wobei die Mehrzahl von Elektrodenfolien (7, 8, 9) mindestens eine erste Elektrodenfolie (7) und mindestens eine zweite Elektrodenfolie (8) einer ersten Elektrodenart, also einer Kathode, sowie mindestens eine dritte Elektrodenfolie (9) einer zweiten Elektrodenart, also einer Anode, umfasst; wobei jede der Elektrodenfolien (7, 8, 9) über jeweils einen Stromsammler (11) mit jeweils einem, sich durch das Gehäuse (5) nach außen erstreckenden Stromanschluss (12, 13, 14) der Batteriezelle (2) verbunden ist; wobei die Batteriezelle (2) mindestens drei Stromanschlüsse (12, 13, 14) aufweist, über die die Batteriezelle (2) an den Stromkreis (3) angeschlossen ist; wobei die mindestens eine erste Elektrodenfolie (7) und die mindestens eine zweite Elektrodenfolie (8) voneinander unterschiedlich ausgeführte Aktivmaterialien aufweisen und die mindestens eine erste Elektrodenfolie (7) mit einem ersten Stromanschluss (12), die mindestens eine zweite Elektrodenfolie (8) mit einem zweiten Stromanschluss (13) und die mindestens eine dritte Elektrodenfolie (9) mit einem dritten Stromanschluss (14) elektrisch leitend verbunden ist; wobei das Steuergerät eine elektrische Verschaltung der Batteriezelle (2) mit dem Stromkreis (4) steuert; wobei das Verfahren zumindest die folgenden Schritte umfasst:
a) Ermitteln einer Temperatur der Batteriezelle (2) und Vergleichen mit einer Grenztemperatur;
b) wobei, wenn die Temperatur unterhalb der Grenztemperatur liegt
i. Betreiben der Batteriezelle (2) ausschließlich über die mindestens eine erste Elektrodenfolie (7) und die mindestens eine dritte Elektrodenfolie (9); oder wenn die Temperatur mindestens der Grenztemperatur entspricht
ii. Betreiben der Batteriezelle (2) ausschließlich über die mindestens eine zweite Elektrodenfolie (8) und die mindestens eine dritte Elektrodenfolie (9) oder zusätzlich auch noch über die mindestens eine erste Elektrodenfolie (7).

2. Verfahren nach Patentanspruch 1, wobei die mindestens eine erste Elektrodenfolie (7) so in der Batteriezelle (2) angeordnet ist, dass möglichst viele der mindestens einen zweiten Elektrodenfolie (8) infolge des Betriebs der Batteriezelle (2) gemäß Schritt b) i. möglichst schnell auf die Grenztemperatur erwärmt werden.

3. Batteriezellenanordnung (1), zumindest umfassend eine Batteriezelle (2), einen Stromkreis (3) und ein Steuergerät (4), wobei das Steuergerät (4) zur Durchführung des Verfahrens nach einem der vorhergehenden Patentansprüche und damit zum Betrieb der Batteriezellenanordnung (1) geeignet ausgeführt ist.

4. Batteriezelle (2) für eine Batteriezellenanordnung (1) nach Patentanspruch 3, wobei die mindestens eine erste Elektrodenfolie (7) ein erstes Aktivmaterial und die mindestens eine zweite Elektrodenfolie (8) ein zweites Aktivmaterial aufweist, wobei die Aktivmaterialien eine voneinander unterschiedliche Zusammensetzung aufweisen.

5. Batteriezelle (2) nach Patentanspruch 4, wobei alle Elektrodenfolien (7, 8) der ersten Elektrodenart mit gleich ausgeführten Aktivmaterialien mit einem gemeinsamen Stromanschluss (12, 13) elektrisch leitend verbunden sind.

6. Batteriezelle (2) nach einem der vorhergehenden Patentansprüche 4 und 5, wobei die Batteriezelle (2) eine geringere Anzahl der ersten Elektrodenfolien (7) als eine Anzahl der zweiten Elektrodenfolien (8) aufweist.

7. Batteriezelle (2) nach einem der vorhergehenden Patentansprüche 4 bis 6, wobei die ersten Elektrodenfolien (7) und die zweiten Elektrodenfolien (8) in dem Stapel (6) entlang einer Stapelrichtung (15) abwechselnd angeordnet sind.

8. Kraftfahrzeug (16), zumindest umfassend eine Batteriezellenanordnung (1) nach Patentanspruch 3 und einen Traktionsantrieb (17) zum Antrieb des Kraftfahrzeuges (16), wobei der Traktionsantrieb (17) durch die mindestens eine Batteriezelle (2) der Batteriezellenanordnung (1) mit Energie versorgbar ist.

9. Steuergerät (4) mit einer elektrischen Verschaltung einer Batteriezelle (2) einer Batteriezellenanordnung (1) und Mittel, die geeignet sind, die Schritte des Verfahrens nach Patentanspruch 1 auszuführen.

10. Computerprogramm, umfassend Befehle, die bewirken, dass das Steuergerät (4) des Patentanspruch 9 die Verfahrensschritte nach Patentanspruch 1 ausführt.
